# EUROPEAN PATENT SPECIFICATION

(11) **EP 4 506 652 B1**
(45) Date of publication and mention of the grant of the patent: **18.06.2025**
(21) Application number: 23193351.6
(22) Date of filing: 25.08.2023
(51) Int. Cl.: G01B 3/1007

(54) **TAPE MEASURE**
MASSBAND
MÈTRE À RUBAN

(30) Priority: 07.08.2023 CN 202322117893 U
(43) Date of publication of application: 12.02.2025
(73) Proprietor: Ningbo JF Tools Industrial Co., Ltd., 315400 Ningbo Zhejiang (CN)
(72) Inventor: JIANG, Jianjun, Ningbo, 315400 (CN); HUANG, Zhonghua, Ningbo, 315400 (CN); HUA, Xiaomao, Ningbo, 315400 (CN); WANG, Ruishi, Ningbo, 315400 (CN)
(74) Representative: Dr. Gassner & Partner mbB

(56) References cited:
- EP-A1- 1 079 202
- CN-U- 208 124 993
- DE-A1- 102007 002 816

## Description

### TECHNICAL FIELD

The present application relates to the technical field of a measuring tool, and in particular to a tape measure.

### BACKGROUND ART

A tape measure is a commonly used measuring tool in daily life, and a common steel tape measure is the commonly used measuring tool in construction and decoration, and is also one of an essential tool for a family. A reason why the tape measure can be rolled up is because there is a spring inside it, when pulling out a measuring length, it actually elongates a length of a ruler and the spring, once a measurement is completed, the spring inside the tape measure will automatically contract, and the ruler will also contracts under an action of a spring force. A head of the tape measure is loose for us to measure a size. When measuring the size with a tape measure, there are two measurement methods, one is hanging on an object, and the other is pressing against it. A difference between the two measurement methods is a thickness of an iron sheet at a head of the tape measure. A purpose of loosening the head of the tape measure is to compensate for the iron sheet on the head of the tape measure when it is pressed against the object.

In a process of measuring an inner diameter of the object with a traditional tape measure, it is necessary to observe a scale of the tape measure at a tape guide opening, obtain a scale value, and then add a distance between an housing of the tape measure departing from a side of the tape guide opening and the tape guide opening to obtain the inner diameter of the object, however, when observing the scale value at the tape guide opening, the scale value is often obstructed by the housing of the tape measure, making it difficult to directly look at the scale value, when reading the scale value at an oblique angle, it is easy to misread and cause measurement errors, which needs improvement. Documents CN 208 124 993 U, EP 1 079 202 A1 and DE 10 2007 002816 A1 disclose tape measures of the prior art.

### SUMMARY

A purpose of the present application is providing a tape measure to solve a problem of measurement errors caused by inconvenient reading of scale values in measuring an inner diameter of objects.

A tape measure according to the invention is defined by the appended claims.

A tape measure includes an housing, a tape reel is connected to the housing, and a ruler tape that is arranged on the tape reel, the housing is provided with a tape guide opening, wherein, the housing is provided with a plurality of positioning components that are spaced at intervals along a circumference of the tape reel, the ruler tape forms a compensation section between the plurality of positioning components and the tape guide opening, the housing is provided with a perspective window corresponding to the compensation section, and the perspective window is provided with a scale alignment line; when the ruler tape is fully retracted, the scale value of the ruler tape corresponding to the scale alignment line is a distance from one side of the housing departing from the tape guide opening to the tape guide opening.

By adopting the above technical solution, when measuring the inner diameter of an object, the perspective window is facing the measurer and the ruler tape is pulled out from the tape guide opening, so that an iron sheet at an end of the ruler tape attached to one side of the inner wall of the object, and one side of the housing departing from the tape guide opening is attached to the inner wall of the other side of the object, looking directly at the perspective window to observe the scale alignment line, reading the scale value corresponding to the scale alignment line, can obtain the inner diameter of the object, effectively reducing measurement errors caused by inconvenient reading of the scale value, and improving the efficiency of measurement at the same time.

The compensation section formed by winding the ruler tape around a plurality of positioning components from the tape reel to the tape guide opening is convenient for reading the scale value of the ruler tape through the perspective window, at the same time, when the ruler tape is fully retracted, the scale value of the ruler tape corresponding to the scale alignment line is the distance from the side of the housing departing from the tape guide opening to the tape guide opening, the scale value of the ruler tape reading from the perspective window is directly the inner diameter of the object to be measured, reduce conversion steps to effectively reduce measurement errors caused by conversion errors.

Optionally, the positioning components comprise a positioning rod that is provided in the housing and an auxiliary bearing that is sleeved on the positioning rod.

By adopting the above technical solution, the bearing guides a direction of the ruler tape, reducing a noise when the ruler tape is pulled out, and reducing a friction force during the movement of the ruler tape, so it is not easy to wear the surface of the ruler tape and improve a smoothness of the ruler tape movement.

Optionally, the housing is provided with a reset element for driving the tape reel to reset and rotate, and the housing is provided with a stop element, an elastic element for driving the stop element to contact the ruler tape, and a control element for driving the stop element to separate from the ruler tape.

By adopting the above technical solution, by pressing the control element, the control element drives the stop element to separate from the ruler tape, making it easier for the ruler tape to be pulled out of the tape guide opening and the tape reel to rotate, at this time, both the elastic element and the reset element undergo elastic deformation and maintain a trend of elastic reset. When the ruler tape is pulled out to a specified length, release the control element, the elastic element is elastically reset and the elastic element drives the stop element to contact a surface of the ruler tape, at the same time, an elastic reset of the reset element drives the tape reel to rotate to retract the ruler tape, due to a contact between the stop element and the surface of the ruler tape, the friction force counteracts the elastic reset force of the reset element, limiting the retract movement of the ruler tape, thereby reducing a possibility of scratching the measurer due to a shaking of the ruler tape caused by a sudden retraction of the ruler tape, and improving a safety of the tape measure.

Optionally, the stop element is rotatably connected to the housing, and the stop element is provided with a contact end, a braking end corresponding to the ruler tape, the control element is rotatably connected to the housing, and the control element is provided with a compression end corresponding to the contact end.

By adopting the above technical solution, by pressing the control element, the control element is driven to rotate, and the compression end contacts the contact end to drive the stop element to rotate, a rotation of the stop element separates the braking end from the surface of the ruler tape, while the elastic element undergoes elastic deformation under force and maintains a trend of elastic reset. When the control element is released, the elastic reset of the elastic element drives the stop element to reset and rotate, and the braking end moves towards the direction facing the ruler tape to contact the surface of the ruler tape, at the same time, the contact end drives the control element to reset and rotate through the compression end.

According to the invention the tape reel is axially provided with a rotating wheel , and the housing is slidably connected with a plurality of speed reduction blocks, a plurality of speed reduction blocks are spaced at intervals along a circumference of the rotating wheel, and a linkage mechanism is provided between the housing and the rotating wheel, the rotating wheel is configured to drive, by means of the linkage mechanism, the speed reduction blocks to slide towards the rotating wheel , the housing is provided with a connector for driving the speed reduction block to reset and slide.

By adopting the above technical solution, when the elastic reset of the reset element drives the tape reel to retract the ruler tape, the tape reel drives the rotating wheel to rotate, the rotating wheel drives a plurality of speed reduction blocks to slide towards the direction facing the rotating wheel through the linkage mechanism, causing the speed reduction block to slide into contact with the circumferential sidewall of the rotating wheel, the connector undergoes elastic deformation under force and maintains a trend of elastic reset, effectively slowing down a speed at which the reset element drives the tape reel to rotate, thereby reducing a possibility of scratching the measurer due to the shaking of the ruler tape caused by the sudden retraction of the ruler tape, and improving a safety of the tape measure.

According to the invention the linkage mechanism comprises a ratchet that is rotatably connected to the housing and coaxial with the rotating wheel, a ratchet pawl that is rotatably connected to the rotating wheel and cooperates with the ratchet, a transmission element that is provided on the rotating wheel and used to drive the ratchet pawl to reset and rotate, and a linkage component that is provided on the housing; the ratchet is configured to rotate to drive, by means of the linkage component, the speed reduction block to slide towards the rotating wheel.

By adopting the above technical solution, when the ruler tape is pulled out, a rotation direction of the rotating wheel at this time causes a thorns of the ratchet to contact the ratchet pawl, causing the ratchet pawl to rotate along a bevels of the thorns towards a direction departing from the ratchet, the transmission element undergoes elastic deformation under force and maintains an elastic reset trend, when the ratchet pawl is located between the two thorns, the transmission element is elastically reset, driving the ratchet pawl to move between the two thorns and circulate in sequence, therefore, a rotation of the rotating wheel cannot drive the ratchet to rotate synchronously.

When the ruler tape is retracted, the rotation direction of the rotating wheel causes the thorns of the ratchet departing from the bevel and contacts the ratchet pawl, at this time, it cannot drive the ratchet pawl to rotate departing from the direction of the ratchet, therefore, the rotation of the rotating wheel can drive the ratchet to rotate synchronously, the rotation of the ratchet can be driven by the linkage component to slide the speed reduction block towards the direction facing the rotating wheel, causing the speed reduction block to slide to contact the circumferential side wall of the rotating wheel, effectively slowing down the speed at which the reset element drives the tape reel to rotate.

Optionally, the linkage component comprises a linkage toothed ring that is provided on a circumferential inner wall of the ratchet, a driving gear and a driven gear that are rotatably connected to the housing, a linkage element that is provided on the driven gear, a fixing element that is provided on the housing for driving the driven gear to reset and rotate; the driving gear is engaged with the linkage toothed ring, the driven gear and the linkage toothed ring are arranged coaxially, and the driving gear is provided with a transmission part that is in clearance transmission with the driven gear.

By adopting the above technical solution, the rotation of the ratchet and a meshing transmission between the linked toothed ring and the driving gear drive the driving gear to rotate, the driving gear drives the driven gear to mesh and drive through the transmission part, at the same time, the driven gear rotates and drives the speed reduction block to slide towards the direction facing the rotating wheel through the linkage element, the fixing element undergoes elastic deformation under force and maintains the trend of elastic reset.

When the transmission part is disengaged from the driven gear for transmission, the fixing element elastically resets and drives the driven gear to reset and rotate, at the same time, the connector elastically resets and drives the speed reduction block to slide departing from the rotating wheel, thus, while slowing down the retraction of the ruler tape, maintaining a certain retraction speed and ensuring the efficiency of tape retraction.

Optionally, a plurality of toothed parts, which are engaged with the driven gear, are provided on a circumferential side wall of the transmission part, and the plurality of toothed parts are spaced along the circumferential side wall of the transmission part.

By adopting the above technical solution, if the toothed part is engaged with the driven gear for transmission, it drives the driven gear to rotate, herein, the fixing element undergoes elastic deformation under force and maintains the trend of elastic reset; if the toothed part is disengaged from the driven gear, then before the next toothed part is engaged with the driven gear, the fixing element elastically resets and drives the driven gear to reset and rotate.

Optionally, the linkage element comprises a linkage rope corresponding to the speed reduction block, a linkage cylinder that is fixedly connected axially to the driven gear, one end of the linkage rope is fixedly connected to the corresponding speed reduction block, and the other end is connected to the linkage cylinder.

By adopting the above technical solution, if the toothed part is engaged with the driven gear for transmission, it drives the driven gear to rotate, herein, the linkage cylinder makes the linkage rope to be retracted, thus driving the speed reduction block to slide towards the direction facing the rotating wheel, causing the speed reduction block to slide to contact a circumferential sidewall of the rotating wheel, herein, the connector undergoes elastic deformation under force and maintains the trend of elastic reset.

If the toothed part is disengaged from the driven gear, the fixing element is elastically reset, which drives the driven gear to reset and rotate, herein, the linkage rope is released from the linkage cylinder, and the connector is elastically reset, thereby driving the speed reduction block to slide departing from the rotating wheel.

Optionally, the speed reduction block is provided with a damping block, and the rotating wheel is provided with a damping ring corresponding to the damping block.

By adopting the above technical solution, the contact between the damping block and damping ring reduces the direct contact between the reduction block and the runner, thereby preventing damage caused by friction between the two, effectively slowing down the speed at which the reset component drives the drum to rotate.

In summary, the present application includes at least one of the following beneficial technical effects:
1. When measuring the inner diameter of the object, the perspective window is facing the measurer. Pull out the ruler tape from the tape guide opening, so that the iron sheet at the end of the ruler tape is attached to the side of the inner wall of the object, and the housing departing from the tape guide opening is attached to the inner wall of the other side of the object, look directly at the perspective window and observe the scale alignment line, read the scale value corresponding to the scale alignment line to obtain the inner diameter of the object. Effectively reducing measurement errors caused by inconvenient reading of scale values, while improving measurement efficiency, the scale value of the ruler tape reading from the perspective window is directly the inner diameter of the object to be measured, reduce conversion steps to effectively reduce measurement errors caused by conversion errors.
2. Due to the contact between the stop element and the surface of the ruler tape, the frictional force counteracts the elastic reset force of the reset element, thereby limiting the retraction movement of the ruler tape, reducing the possibility of scratching the measurer due to the shaking of the ruler tape caused by the sudden retraction of the ruler tape, and improving the safety of the tape measure.
3. When the elastic reset of the reset element drives the tape reel to retract the ruler tape, the tape reel drives the rotating wheel to rotate, the rotating wheel drives a plurality of speed reduction blocks to slide towards the direction facing the rotating wheel through the linkage mechanism, causing the speed reduction block to slide into contact with the circumferential sidewall of the rotating wheel, herein, the connector undergoes elastic deformation under force and maintains the trend of elastic reset, effectively slowing down the speed at which the reset element drives the tape reel to rotate, reducing the possibility of scratching the measurer due to the shaking of the ruler tape caused by the sudden retraction of the ruler tape, and improving the safety of the tape measure.

### BRIEF DESCRIPTION OF THE DRAWINGS

FIG. 1 is a schematic overall structural view according to an embodiment 1 of the present application;
FIG. 2 is a schematic view of an internal structure of a housing according to the embodiment 1 of the present application;
FIG. 3 is a schematic explosion view according to an embodiment 2 of the present application;
FIG. 4 is a schematic view of a tape reel according to the embodiment 2 of the present application;
FIG. 5 is a schematic structural view of a linkage mechanism according to the embodiment 2 of the present application;
FIG. 6 is a schematic structural view of a linkage component according to the embodiment 2 of the present application;
FIG. 7 is a schematic structural view of a linkage element according to the embodiment 2 of the present application.

### DETAILED DESCRIPTION

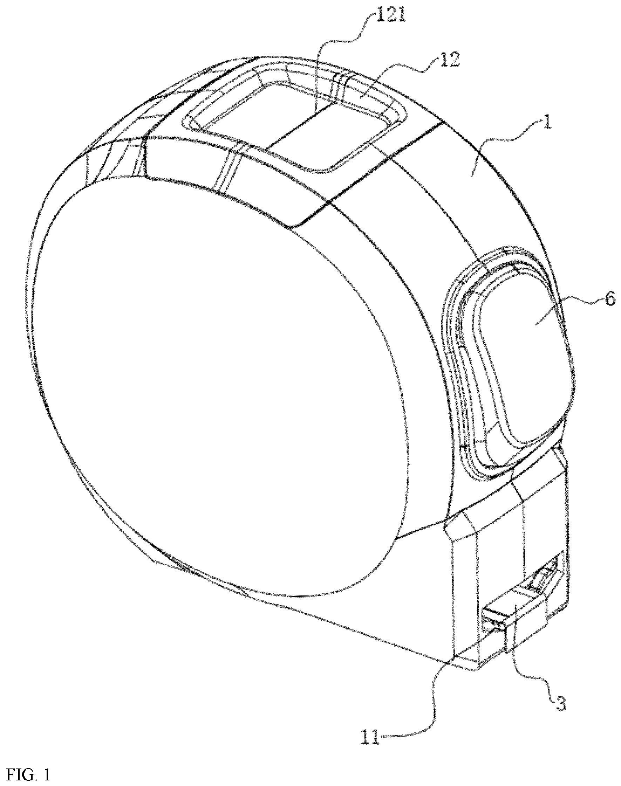

The present application will be further described in detail below in combination with the FIGs. 1-7.

### Embodiment 1

The embodiment 1 of the present application discloses a tape measure.

Referring to FIG. 1, a tape measure includes an housing 1 that is fixedly connected by screws between a left casing and a right casing and has an internal cavity, a rotating shaft 16 that is fixedly connected to an inner wall of the housing 1, a tape reel 2 that is rotatably connected to the rotating shaft 16, and a ruler tape 3 that is wound around the tape reel 2, one end of the housing 1 is integrally formed with a tape guide opening 11.

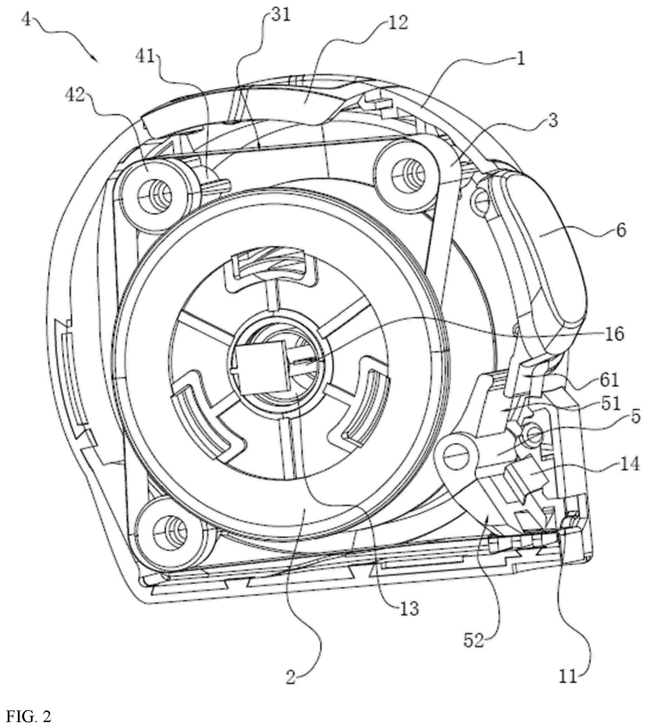

Referring to FIGs. 1 and 2, the housing 1 is provided with three positioning components 4, which are spaced at intervals along a circumference of the tape reel 2, the ruler tape 3 extends from the tape guide opening 11 around the three positioning components 4, and forms a compensation section 31 between the three positioning components 4 and the tape guide opening 11. The housing 1 is integrally formed with a socket connected to the interior of the housing 1, and there is a perspective window 12 corresponding to the compensation section 31 in the socket, the perspective window 12 is made of transparent material such as transparent resin or glass. The perspective window 12 is engraved with a scale alignment line 121, when the ruler tape 3 is fully retracted, the scale value of the ruler tape 3 corresponding to the scale alignment line 121 is a distance from a side of the housing 1 departing from the tape guide opening 11 to the tape guide opening 11.

Referring to FIGs. 1 and 2, the positioning component 4 includes a positioning rod 41 that is fixedly connected to the inner wall of the housing 1, and an auxiliary bearing 42 that is sleeved on the positioning rod 41.

Referring to FIGs. 1 and 2, the housing 1 is provided with a reset element 13 for driving the tape reel 2 to reset and rotate, the reset element 13 is a coil spring sleeved on the rotating shaft 16, one end of the coil spring is fixedly connected to the rotating shaft 16 and the other end is fixedly connected to the tape reel 2. The housing 1 is provided with a stop element 5, an elastic element 14 is used to dive the stop element 5 to contact the ruler tape 3, and a control element 6 is used to separate the stop element 5 and the ruler tape 3.

Referring to FIGs. 1 and 2, the stop element 5 is rotatably connected to the housing 1, and a circumferential side wall of the stop element 5 is integrally formed with a contact end 51 and a braking end 52 corresponding to the ruler tape 3. A control element 6 is a button block rotatably connected to the housing 1, which is integrally formed with a gap for the button block to extend, one end of the control element 6 is integrally formed with a compression end 61 corresponding to the contact end 51. The elastic element 14 is a V-shaped elastic piece, one end of the elastic piece is embedded on the inner wall of the housing 1, and the other end is in contact with a side of the contact end 51 facing the tape guide opening 11.

An implementation principle for embodiment 1 of the present application will be described below.

When measuring an inner diameter of an object, the perspective window 12 is facing a measurer, pull out the ruler tape 3 from the tape guide opening 11, so that the iron sheet at an end of the ruler tape 3 is attached to one side of the inner wall of the object, and the housing 1 departing from the tape guide opening 11 is attached to the inner wall of the other side of the object, look directly at the perspective window 12 and observe the scale alignment line 121, read the scale value corresponding to the scale alignment line 121 to obtain the inner diameter of the object.

The compensation section 31 formed by winding the ruler tape 3 around a plurality of positioning components 4 from the tape reel 2 to the tape guide opening 11 is convenient for reading the scale value of the ruler tape 3 through the perspective window 12, at the same time, when the ruler tape 3 is fully retracted, the scale value of the ruler tape 3 corresponding to the scale alignment line 121 is the distance from the side of the housing 1 departing from the tape guide opening 11 to the tape guide opening 11, the scale value of the ruler tape 3 read from the perspective window 12 is directly the inner diameter of the object to be measured.

By pressing the control element 6, the control element 6 drives the stop element 5 to separate from the ruler tape 3, making it easier for the ruler tape 3 to be pulled out of the tape guide opening 11 and the tape reel 2 to rotate, at this time, both the elastic element 14 and the reset element 13 undergo elastic deformation and maintain a trend of elastic reset. When the ruler tape 3 is pulled out to a specified length, release the control element 6, the elastic element 14 is elastically reset and the elastic element 14 drives the stop element 5 to contact a surface of the ruler tape 3, at the same time, an elastic reset of the reset element 13 drives the tape reel 2 to rotate to retract the ruler tape 3, due to a contact between the stop element 5 and the surface of the ruler tape 3, a friction force counteracts the elastic reset force of the reset element 13, limiting the retraction movement of the ruler tape 3.

### Embodiment 2

Embodiment 2 of the present application discloses a tape measure.

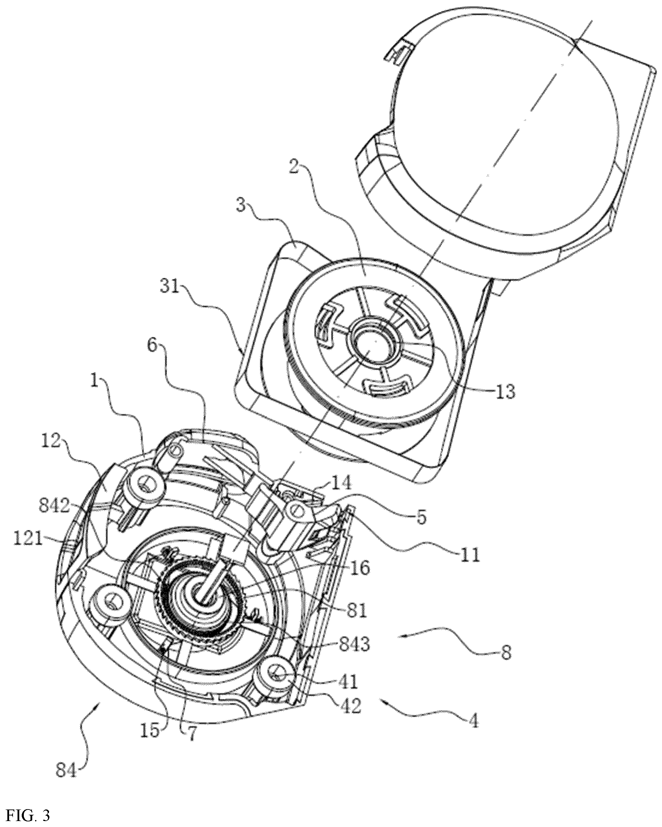

Referring to FIG. 3, a difference between embodiment 2 and embodiment 1 of the present application is that one side of the tape reel 2 is fixedly connected axially to a rotating wheel 21 that is coaxial with a coaxial centerline of the tape reel 2, the inner wall of the housing 1 facing the rotating wheel 21 is slidably connected with three speed reduction blocks 7, which are spaced at intervals along a circumference of the rotating wheel 21. A linkage mechanism 8 is provided between the housing 1 and the rotating wheel 21, and the rotating wheel 21 drives the speed reduction block 7 to slide towards the direction facing the rotating wheel 21 through the linkage mechanism 8. The housing 1 is provided with a connector 15 for driving the speed reduction block 7 to reset and slide, the connector 15 is a connecting spring, one end of the connecting spring is fixedly connected to the inner wall of the housing 1 and the other end is fixedly connected to the speed reduction block 7. A damping block 71 is fixedly connected to one side of the speed reduction block 7 facing the rotating wheel 21, and a damping ring 22 corresponding to the damping block 71 is fixedly connected to a circumferential side wall of the rotating wheel 21. The damping block 71 and the damping ring 22 are both made of wear-resistant materials such as a rubber.

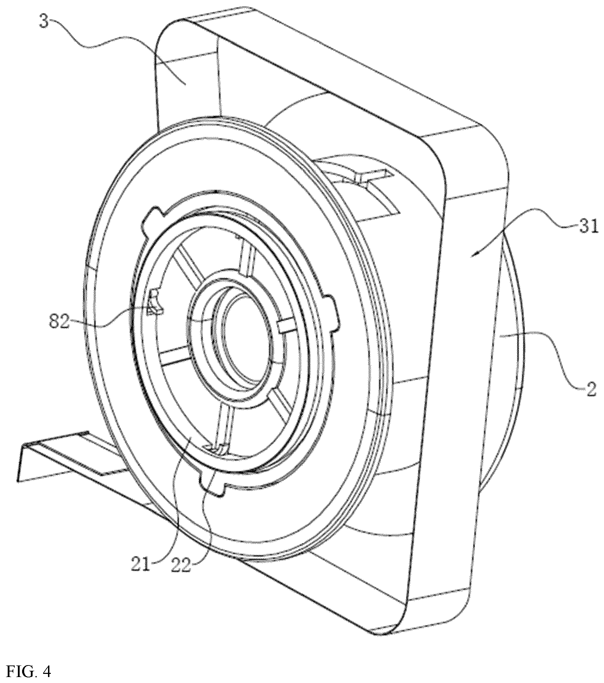

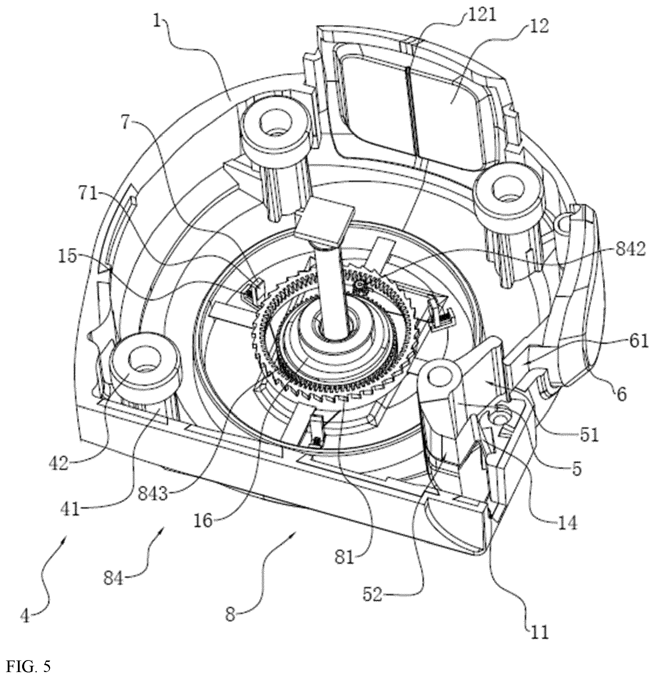

Referring to FIGs. 4 and 5, the linkage mechanism 8 includes a ratchet 81 that is rotatably connected to the housing 1 and coaxial with the rotating wheel 21, a ratchet pawl 82 that is rotatably connected to a circumferential inner wall of the rotating wheel 21 and cooperates with the ratchet 81, a transmission element 83 that is installed on the rotating wheel 21 and used to drive the ratchet pawl 82 to reset and rotate, and a linkage component 84 that is installed on the housing 1, the ratchet 81 rotates and drives the speed reduction block 7 to slide in the direction facing the rotating wheel 21 through the linkage component 84. The rotating wheel 21 is rotatably connected to the ratchet pawl 82 through a connecting shaft, and the transmission element 83 is a connecting torsion spring sleeved on the connecting shaft, one end of the connecting torsion spring is fixedly connected to the ratchet pawl 82, and the other end is fixedly connected to the rotating wheel 21.

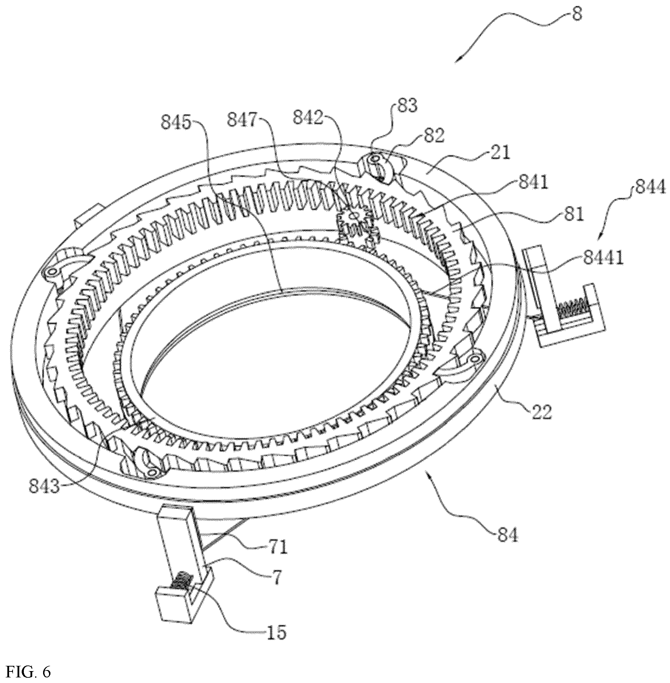

Referring to FIGs. 5 and 6, the linkage component 84 includes a linkage toothed ring 841 that is fixedly connected to a circumferential inner wall of the ratchet 81, a driving gear 842 that is rotatably connected to the housing 1, a driven gear 843 that is rotatably connected to the rotating shaft 16, a linkage element 844 that is installed on the driven gear 843, and a fixing element 845 that is installed on the rotating shaft 16 for driving the driven gear 843 to reset and rotate. The fixing element 845 is a fixed torsion spring sleeved on the rotating shaft 16, one end of the fixed torsion spring is fixedly connected to the rotating shaft 16 and the other end is fixedly connected to the driven gear 843. The driving gear 842 is engaged with the linkage toothed ring 841 for transmission, and the driven gear 843 and the linkage toothed ring 841 are arranged coaxially, the driving gear 842 is fixedly connected with a transmission part 846 that is in clearance transmission with the driven gear 843.

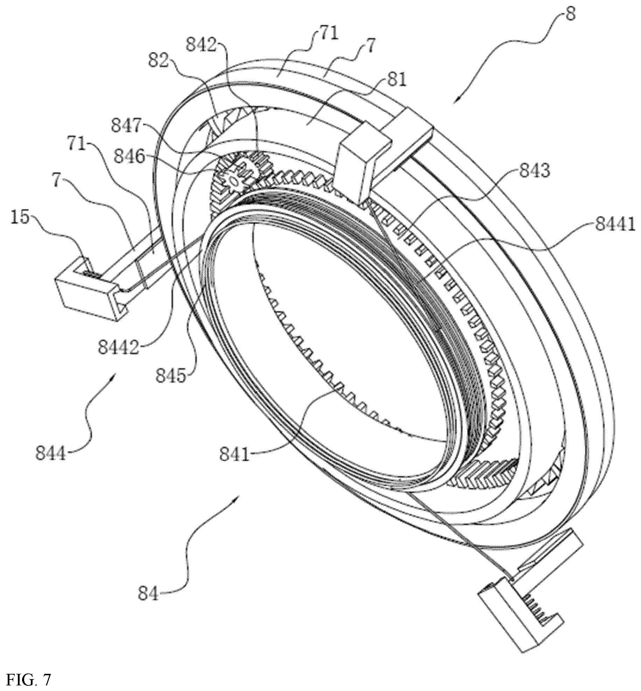

Referring to FIGs. 6 and 7, a circumferential side wall of the transmission part 846 is fixedly connected with a plurality of toothed parts 847 that is engaged with the driven gear 843, and a plurality of toothed parts 847 are spaced along the circumferential side wall of the transmission part 846. The linkage element 844 includes a linkage rope 8441 corresponding to the speed reduction block 7, a linkage cylinder 8442 is axially fixed to the driven gear 843, the linkage cylinder 8442 is rotatably connected to the rotation shaft 16, one end of the linkage rope 8441 is fixedly connected to the corresponding speed reduction block 7, and the other end is wrapped and fixedly connected to the linkage cylinder 8442.

An implementation principle for embodiment 2 of the present application will be described below.

When the elastic reset of the reset element 13 drives the tape reel 2 to retract the ruler tape 3, the tape reel 2 drives the rotating wheel 21 to rotate, the rotating wheel 21 drives a plurality of speed reduction blocks 7 to slide towards the direction facing the rotating wheel 21 through the linkage mechanism 8, causing the speed reduction block 7 to slide into contact with the circumferential sidewall of the rotating wheel 21, the connector 15 undergoes elastic deformation under force and maintains a trend of elastic reset, effectively slowing down a speed at which the reset element 13 drives the tape reel 2 to rotate.

When the ruler tape 3 is pulled out, a rotation direction of the rotating wheel 21 at this time causes a thorns of the ratchet 81 to contact the ratchet pawl 82, causing the ratchet pawl 82 to rotate along a bevels of the thorns towards a direction departing from the ratchet 81, the transmission element 83 undergoes elastic deformation under force and maintains an elastic reset trend. When the ratchet pawl 82 is located between the two thorns, the transmission element 83 is elastically reset, driving the ratchet pawl 82 to move between the two thorns and circulate in sequence. Therefore, a rotation of the rotating wheel 21 cannot drive the ratchet 81 to rotate synchronously;

When the ruler tape 3 is retracted, the rotation direction of the rotating wheel 21 causes the thorns of the ratchet 81 departing from the bevel and contacts the ratchet pawl 82, at this time, it cannot drive the ratchet pawl 82 to rotate departing from the direction of the ratchet 81, therefore, the rotation of the rotating wheel 21 can drive the ratchet 81 to rotate synchronously. The rotation of the ratchet 81 can be driven by the linkage component 84 to slide the speed reduction block 7 towards the direction facing the rotating wheel 21, causing the speed reduction block 7 to slide to contact the circumferential side wall of the rotating wheel 21, effectively slowing down the speed at which the reset element 13 drives the tape reel 2 to rotate.

### List of references signs:

- 1.: housing
- 11.: tape guide opening
- 12.: perspective window
- 121.: scale alignment line
- 13.: reset element
- 14.: elastic element
- 15.: connector
- 16.: rotating shaft
- 2.: tape reel
- 21.: rotating wheel
- 22.: damping ring
- 3.: ruler tape
- 31.: compensation section
- 4.: positioning component
- 41.: positioning rod
- 42.: auxiliary bearing
- 5.: stop element
- 51.: contact end
- 52.: braking end
- 6.: control element
- 61.: compression end
- 7.: speed reduction block
- 71.: damping block
- 8.: linkage mechanism
- 81.: ratchet
- 82.: ratchet pawl
- 83.: transmission element
- 84.: linkage component
- 841.: linkage toothed ring
- 842.: driving gear
- 843.: driven gear
- 844.: linkage element
- 8441.: linkage rope
- 8442.: linkage cylinder
- 845.: fixing element
- 846.: transmission part
- 847.: toothed part

## Claims

1. A tape measure, comprising: an housing (1), a tape reel (2) that is connected to the housing (1), and a ruler tape (3) that is arranged on the tape reel (2), wherein the housing (1) is provided with a tape guide opening (11), the housing (1) is provided with a plurality of positioning components (4) that are spaced at intervals along a circumference of the tape reel (2), a compensation section (31) is formed on the ruler tape (3) between the plurality of positioning components (4) and the tape guide opening (11), the housing (1) is provided with a perspective window (12) corresponding to the compensation section (31), and the perspective window (12) is provided with a scale alignment line (121); when the ruler tape (3) is fully retracted, a scale value of the ruler tape (3) corresponding to the scale alignment line (121) is a distance from one side of the housing (1) departing from the tape guide opening (11) to the tape guide opening (11), **characterised in that** the tape reel (2) is axially provided with a rotating wheel (21), the housing (1) is slidably connected with a plurality of speed reduction blocks (7) that are spaced at intervals along a circumference of the rotating wheel (21), a linkage mechanism (8) is provided between the housing (1) and the rotating wheel (21), the rotating wheel (21) is configured to drive, by means of the linkage mechanism (8), the speed reduction blocks (7) to slide towards the rotating wheel (21), and the housing (1) is provided with a connector (15) for driving the speed reduction block (7) to reset and slide,
the linkage mechanism (8) comprises a ratchet (81) that is rotatably connected to the housing (1) and is coaxial with the rotating wheel (21), a ratchet pawl (82) that is rotatably connected to the rotating wheel (21) and cooperates with the ratchet (81), a transmission element (83) that is provided on the rotating wheel (21) and is configured to drive the ratchet pawl (82) to reset and rotate, and a linkage component (84) that is provided on the housing (1); the ratchet (81) is configured to rotate to drive, by means of the linkage component (84), the speed reduction block (7) to slide towards the rotating wheel (21).

2. The tape measure according to claim 1, **characterized in that**, the positioning components (4) comprises a positioning rod (41) that is provided in the housing (1) and an auxiliary bearing (42) that is sleeved on the positioning rod (41).

3. The tape measure according to claim 1, **characterized in that**, the housing (1) is provided NINGBO JF TOOLS INDUSTRIAL CO., LTD.-pa2-clean copy
with a reset element (13) for driving the tape reel (2) to reset and rotate; and the housing (1) is provided with a stop element (5), an elastic element (14) for driving the stop element (5) to contact with the ruler tape (3), and a control element (6) for driving the stop element (5) to separate from the ruler tape (3).

4. The tape measure according to claim 3, **characterized in that**, the stop element (5) is rotatably connected to the housing (1); the stop element (5) is provided with a contact end (51), and a braking end (52) corresponding to the ruler tape (3); the control element (6) is rotatably connected to the housing (1); and the control element (6) is provided with a compression end (61) corresponding to the contact end (51).

5. The tape measure according to claim 1, **characterized in that**, the linkage component (84) comprises a linkage toothed ring (841) that is provided on a circumferential inner wall of the ratchet (81), a driving gear (842) and a driven gear (843) that are rotatably connected to the housing (1), a linkage element (844) that is provided on the driven gear (843), and a fixing element (845) that is provided on the housing (1) for driving the driven gear (843) to reset and rotate; the driving gear (842) is engaged with the linkage toothed ring (841), the driven gear (843) and the linkage toothed ring (841) are arranged coaxially, and the driving gear (842) is provided with a transmission part (846) that is in clearance transmission with the driven gear (843).

6. The tape measure according to claim 5, **characterized in that**, a plurality of toothed parts (847), which are engaged with the driven gear (843), are provided on a circumferential side wall of the transmission part (846), and the plurality of toothed parts (847) are spaced along the circumferential side wall of the transmission part (846).

7. The tape measure according to claim 5, **characterized in that**, the linkage element (844) comprises a linkage rope (8441) corresponding to the speed reduction block (7), and a linkage cylinder (8442) that is fixedly connected axially to the driven gear (843); a first end of the linkage rope (8441) is fixedly connected to the corresponding speed reduction block (7), and a second end of the linkage rope (8441) is connected to the linkage cylinder (8442).

8. The tape measure according to claim 1, **characterized in that**, the speed reduction block (7) is provided with a damping block (71), and the rotating wheel (21) is provided with a damping ring (22) corresponding to the damping block (71).

## Patentansprüche

1. Bandmaß, umfassend: ein Gehäuse (1), eine Bandspule (2), die mit dem Gehäuse (1) verbunden ist, und ein Linealband (3), das auf der Bandspule (2) angeordnet ist, wobei das Gehäuse (1) mit einer Bandführungsöffnung (11) versehen ist, das Gehäuse (1) ist mit einer Mehrzahl von Positionierungskomponenten (4) versehen, die in Abständen entlang des Umfangs der Bandspule (2) angeordnet sind, ein Ausgleichsabschnitt (31) ist auf dem Linealband (3) zwischen der Mehrzahl von Positionierungskomponenten (4) und der Bandführungsöffnung (11) ausgebildet, das Gehäuse (1) ist mit einem dem Ausgleichsabschnitt (31) entsprechenden Sichtfenster (12) versehen und das Sichtfenster (12) ist mit einer Skalenausrichtungslinie (121) versehen; wenn das Linealband (3) vollständig zurückgezogen ist, entspricht der Skalenwert des Linealbands (3), der der Skalenausrichtungslinie (121) entspricht, dem Abstand von einer Seite des Gehäuses (1), die von der Bandführungsöffnung (11) ausgeht, zu der Bandführungsöffnung (11), **dadurch gekennzeichnet, dass** die Bandspule (2) axial mit einem Drehrad (21) versehen ist, das Gehäuse (1) verschiebbar mit einer Mehrzahl von Geschwindigkeitsreduktionsblöcken (7) verbunden ist, die in Abständen entlang des Umfangs des Drehrads (21) angeordnet sind, ein Verbindungsmechanismus (8) ist zwischen dem Gehäuse (1) und dem Drehrad (21) vorgesehen, das Drehrad (21) ist so konfiguriert, dass es mittels des Verbindungsmechanismus' (8) die Geschwindigkeitsreduzierungsblöcke (7) so antreibt, dass sie in Richtung des Drehrads (21) gleiten, und das Gehäuse (1) ist mit einem Verbinder (15) versehen, um den Geschwindigkeitsreduzierungsblock (7) zum Zurücksetzen und Gleiten anzutreiben,
der Verbindungsmechanismus (8) umfasst eine Sperrklinke (81), die drehbar mit dem Gehäuse (1) verbunden ist und koaxial mit dem Drehrad (21) ist, eine Sperrklinke (82), die drehbar mit dem Drehrad (21) verbunden ist und mit der Sperrklinke (81) zusammenwirkt, ein Übertragungselement (83), das an dem Drehrad (21) vorgesehen ist und so konfiguriert ist, dass es die Sperrklinke (82) zum Rückstellen und Drehen antreibt, und eine Verbindungskomponente (84) umfasst, die an dem Gehäuse (1) vorgesehen ist; die Sperrklinke (81) ist so konfiguriert, dass sie sich dreht, um mittels der Verbindungskomponente (84) den Geschwindigkeitsreduzierungsblock (7) so anzutreiben, dass er in Richtung des Drehrads (21) gleitet.

2. Maßband nach Anspruch 1, **dadurch gekennzeichnet, dass** die Positionierungskomponenten (4) eine im Gehäuse (1) vorgesehene Positionierungsstange (41) und ein auf der Positionierungsstange (41) gelagertes Hilfslager (42) umfassen.

3. Maßband nach Anspruch 1, **dadurch gekennzeichnet, dass** das Gehäuse (1) mit einem Rückstellelement (13) versehen ist, um die Bandspule (2) zum Rückstellen und Drehen anzutreiben; und dass das Gehäuse (1) mit einem Anschlagelement (5), einem elastischen Element (14) zum Antreiben des Anschlagelements (5), um es mit dem Linealband (3) in Kontakt zu bringen, und einem Steuerelement (6) zum Antreiben des Anschlagelements (5), um es von dem Linealband (3) zu trennen, versehen ist.

4. Maßband nach Anspruch 3, **dadurch gekennzeichnet, dass** das Anschlagelement (5) drehbar mit dem Gehäuse (1) verbunden ist; dass das Anschlagelement (5) mit einem Kontaktende (51) und einem dem Linealband (3) entsprechenden Bremsende (52) versehen ist; dass das Steuerelement (6) drehbar mit dem Gehäuse (1) verbunden ist; und das Steuerelement (6) mit einem dem Kontaktende (51) entsprechenden Druckende (61) versehen ist.

5. Maßband nach Anspruch 1, **dadurch gekennzeichnet, dass** die Verbindungskomponente (84) einen Verbindungszahnring (841), der an einer umlaufenden Innenwand der Ratsche (81) vorgesehen ist, ein Antriebszahnrad (842) und ein Abtriebszahnrad (843), die drehbar mit dem Gehäuse (1) verbunden sind, ein Verbindungselement (844), das an dem Abtriebszahnrad (843) vorgesehen ist, und ein Befestigungselement (845), das an dem Gehäuse (1) vorgesehen ist, um das Abtriebszahnrad (843) zum Rückstellen und Drehen anzutreiben, umfasst; dass das antreibende Zahnrad (842) mit dem Verbindungszahnring (841) in Eingriff steht, dass das angetriebene Zahnrad (843) und der Verbindungszahnring (841) koaxial angeordnet sind, und dass das antreibende Zahnrad (842) mit einem Übertragungsteil (846) versehen ist, wobei die Übertragung mit dem angetriebenen Zahnrad (843) Spiel aufweist.

6. Maßband nach Anspruch 5, **dadurch gekennzeichnet, dass** mehrere gezahnte Teile (847), die mit dem angetriebenen Zahnrad (843) in Eingriff stehen, an einer Umfangsseitenwand des Übertragungsteils (846) vorgesehen sind, und die mehreren gezahnten Teile (847) entlang der Umfangsseitenwand des Übertragungsteils (846) beabstandet angeordnet sind.

7. Maßband nach Anspruch 5, **dadurch gekennzeichnet, dass** das Verbindungselement (844) ein Verbindungsseil (8441), das dem Geschwindigkeitsreduzierungsblock (7) entspricht, und einen Verbindungszylinder (8442) umfasst, der axial fest mit dem angetriebenen Zahnrad (843) verbunden ist, ein erstes Ende des Verbindungsseils (8441) ist fest mit dem entsprechenden Geschwindigkeitsreduzierungsblock (7) verbunden, und ein zweites Ende des Verbindungsseils (8441) ist mit dem Verbindungszylinder (8442) verbunden.

8. Maßband nach Anspruch 1, **dadurch gekennzeichnet, dass** der Geschwindigkeitsreduktionsblock (7) mit einem Dämpfungsblock (71) und das Drehrad (21) mit einem dem Dämpfungsblock (71) entsprechenden Dämpfungsring (22) versehen ist.

## Revendications

1. Mètre ruban comprenant un boîtier (1), une bobine de ruban (2) qui est reliée au boîtier (1), et un ruban gradué (3) qui est disposé sur la bobine de ruban (2), en ce que le boîtier (1) comporte une ouverture de guidage de ruban (11), le boîtier (1) comporte une pluralité de composants de positionnement (4) qui sont espacés par des intervalles le long d'une circonférence de la bobine de ruban (2), une section de compensation (31) est formée sur le ruban gradué (3) entre la pluralité de composants de positionnement (4) et l'ouverture de guidage de ruban (11), le boîtier (1) comporte une fenêtre en perspective (12) correspondant à la section de compensation (31), et la fenêtre en perspective (12) comporte une ligne d'alignement d'échelle (121) ; lorsque le ruban gradué (3) est complètement rétracté, une valeur d'échelle du ruban gradué (3) correspondant à la ligne d'alignement d'échelle (121) est une distance entre un côté du boîtier (1) partant de l'ouverture de guidage de ruban (11) et l'ouverture de guidage de ruban (11), **caractérisé en ce que** la bobine de ruban (2) comporte axialement une roue rotative (21), le boîtier (1) est relié de manière coulissante à une pluralité de blocs de réduction de vitesse (7) qui sont espacés par des intervalles le long d'une circonférence de la roue rotative (21), un mécanisme de liaison (8) est ménagé entre le boîtier (1) et la roue rotative (21), la roue rotative (21) est conçue pour entraîner, au moyen du mécanisme de liaison (8), les blocs de réduction de vitesse (7) à coulisser vers la roue rotative (21), et le boîtier (1) comporte un connecteur (15) pour entraîner le bloc de réduction de vitesse (7) à se remettre à l'état initial et à coulisser, le mécanisme de liaison (8) comprend un rochet (81) qui est relié de manière rotative au boîtier (1) et est coaxial à la roue rotative (21), un cliquet de rochet (82) qui est relié de manière rotative à la roue rotative (21) et coopère avec le rochet (81), un élément de transmission (83) qui est disposé sur la roue rotative (21) et est conçu pour entraîner le cliquet de rochet (82) à se remettre à l'état initial et à tourner, et un composant de liaison (84) qui est disposé sur le boîtier (1) ; le rochet (81) est conçu pour tourner afin d'entraîner, au moyen du composant de liaison (84), le bloc de réduction de vitesse (7) à coulisser vers la roue rotative (21).

2. Mètre ruban selon la revendication 1, **caractérisé en ce que** le composant de positionnement (4) comprend une tige de positionnement (41) qui est disposée dans le boîtier (1) et un palier auxiliaire (42) qui est emmanché sur la tige de positionnement (41).

3. Mètre ruban selon la revendication 1, **caractérisé en ce que** le boîtier (1) comporte un élément de remise à l'état initial (13) pour entraîner la bobine de ruban (2) à se remettre à l'état initial et à tourner ; et le boîtier (1) comporte un élément d'arrêt (5), un élément élastique (14) pour entraîner l'élément d'arrêt (5) à entrer en contact avec le ruban gradué (3), et un élément de commande (6) pour entraîner l'élément d'arrêt (5) à se séparer du ruban gradué (3).

4. Mètre ruban selon la revendication 3, **caractérisé en ce que** l'élément d'arrêt (5) est relié de manière rotative au boîtier (1) ; l'élément d'arrêt (5) comporte une extrémité de contact (51), et une extrémité de freinage (52) correspondant au ruban gradué (3) ; l'élément de commande (6) est relié de manière rotative au boîtier (1) ; et l'élément de commande (6) comporte une extrémité de compression (61) correspondant à l'extrémité de contact (51).

5. Mètre ruban selon la revendication 1, **caractérisé en ce que** le composant de liaison (84) comprend une couronne à denture extérieure de liaison (841) qui est disposée sur une paroi intérieure circonférentielle du rochet (81), un engrenage d'entraînement (842) et un engrenage mené (843) qui sont reliés de manière rotative au boîtier (1), un élément de liaison (844) qui est disposé sur l'engrenage mené (843), et un élément de fixation (845) qui est disposé sur le boîtier (1) pour entraîner l'engrenage mené (843) à se remettre à l'état initial et tourner ; l'engrenage d'entraînement (842) est en prise avec la couronne à denture extérieure de liaison (841), l'engrenage mené (843) et la couronne à denture extérieure de liaison (841) sont disposés de manière coaxiale, et l'engrenage d'entraînement (842) comporte une partie de transmission (846) qui est en transmission avec jeu avec l'engrenage mené (843).

6. Mètre ruban selon la revendication 5, **caractérisé en ce qu'**une pluralité de parties dentées (847), qui sont en prise avec l'engrenage mené (843), sont disposées sur une paroi latérale circonférentielle de la partie de transmission (846), et la pluralité de parties dentées (847) sont espacées le long de la paroi latérale circonférentielle de la partie de transmission (846).

7. Mètre ruban selon la revendication 5, **caractérisé en ce que** l'élément de liaison (844) comprend une corde de liaison (8441) correspondant au bloc de réduction de vitesse (7), et un cylindre de liaison (8442) qui est relié à demeure axialement à l'engrenage mené (843) ; une première extrémité de la corde de liaison (8441) est reliée à demeure au bloc de réduction de vitesse (7) correspondant, et une deuxième extrémité de la corde de liaison (8441) est reliée au cylindre de liaison (8442).

8. Mètre ruban selon la revendication 1, **caractérisé en ce que** le bloc de réduction de vitesse (7) comporte un bloc amortisseur (71), et la roue rotative (21) comporte un anneau amortisseur (22) correspondant au bloc amortisseur (71).
